# EUROPÄISCHE PATENTANMELDUNG

(11) **EP 1 793 163 A1**
(43) Veröffentlichungstag der Anmeldung: **06.06.2007**
(21) Anmeldenummer: 05026486.0
(22) Anmeldetag: 05.12.2005
(51) Int. Cl.: F22B 37/18, F22B 29/06

(54) **Dampferzeugerrohr, zugehöriges Herstellungsverfahren sowie Durchlaufdampferzeuger**

(71) Anmelder: SIEMENS AKTIENGESELLSCHAFT, 80333 München (DE)
(72) Erfinder: Franke, Joachim, Dr., 90518 Altdorf (DE); Herbst, Oliver, 91077 Dormitz (DE); Schmidt, Holger, Dr., 91052 Erlangen (DE)

(57) **Zusammenfassung**

Ein Dampferzeugerrohr (10) soll bei einfach und kostengünstig gehaltener Fertigung und bei einer großen Bandbreite unterschiedlicher Betriebsbedingungen ein besonders günstiges Wärmeübergangsverhalten aufweisen. Dazu ist erfindungsgemäß mindestens ein Einsatz (22) im Rohrinnenraum (18) zur Bildung eines drallerzeugenden Innenprofils angeordnet, wobei der Einsatz (22) mindestens einen Blechrahmen (24) mit einer Anzahl großflächiger Ausnehmungen (26) umfasst, und wobei der Einsatz (22) in Längsrichtung verdrillt ist und mit seinen Längskanten (30) zumindest teilweise an der Rohrinnenwand (36) anliegt.

## Beschreibung

Die Erfindung betrifft ein Dampferzeugerrohr mit einem drallerzeugenden Innenprofil. Sie betrifft weiterhin einen Durchlaufdampferzeuger mit derartigen Dampferzeugerrohren. Die Erfindung bezieht sich ferner auf ein Verfahren zum Herstellen eines mit einem drallerzeugenden Innenprofil versehenen Dampferzeugerrohres.

In den Brennkammerwänden eines Durchlaufdampferzeugers werden üblicherweise miteinander über Stege gasdicht verschweißte Dampferzeugerrohre zur Bildung eines den Feuerraum umgebenden Gaszuges eingesetzt, die für den Durchfluss eines Strömungsmediums parallel geschaltet sind. Anstelle von Rohren mit dazwischen liegenden, separaten Flacheisenstegen können auch Rohre verwendet werden, die bereits werksseitig mit angeformten Flossen ausgerüstet sind. Die Dampferzeugerrohre können dabei vertikal oder auch schräg angeordnet sein. Für ein sicheres Betriebsverhalten des Durchlaufdampferzeugers sind die Dampferzeugerrohre in der Regel derart ausgelegt, dass auch bei niedrigen Massenstromdichten des die Dampferzeugerrohre durchströmenden Mediums eine ausreichende Kühlung der Dampferzeugerrohre gewährleistet ist.

Ein wichtiges Auslegungskriterium sind die Wärmeübergangseigenschaften eines Dampferzeugerrohres. Ein hoher Wärmeübergang ermöglicht eine besonders effektive Beheizung des das Dampferzeugerrohr durchströmenden Mediums bei gleichzeitig zuverlässiger Kühlung des Dampferzeugerrohres an sich. Das Wärmeübergangsverhalten eines Dampferzeugerrohres kann bei konventionellen Dampferzeugern, die bei unterkritischen Drücken betrieben werden, durch das Auftreten so genannter Siedekrisen beeinträchtigt sein. Dabei wird die Rohrwand nicht mehr vom flüssigen Strömungsmedium - in der Regel Wasser - benetzt und somit nur unzureichend gekühlt. Infolge von zu frühem Austrocknen könnten dann die Festigkeitswerte der Rohrwand reduziert werden.

Für eine Verbesserung des Wärmeübergangsverhaltens kommen üblicherweise Dampferzeugerrohre zum Einsatz, die infolge eines Verformungsprozesses (z. B. Kaltziehen) auf ihrer Innenseite eine Oberflächenstruktur oder ein Innenprofil in der Art schraubenförmig gewundener Rippen aufweisen. Durch die Formgebung der Rippen wird dem das Dampferzeugerrohr durchströmenden Medium ein Drall eingeprägt, so dass sich die schwerere flüssige Phase infolge der wirkenden Zentrifugalkräfte an der Rohrinnenwand sammelt und dort einen benetzenden Flüssigkeitsfilm ausbildet. Damit ist auch bei vergleichsweise hohen Wärmestromdichten und niedrigen Massenstromdichten ein zuverlässiger Wärmeübergang von der Rohrinnenwand auf das Strömungsmedium gewährleistet.

Nachteilig ist bei den bekannten Dampferzeugerrohren, dass diese infolge der begrenzten Verformbarkeit des Rohrmaterials vergleichsweise aufwändig herzustellen sind. Insbesondere bei hochwarmfesten Stählen mit hohem Chromgehalt ist die Verformbarkeit stark eingeschränkt. Derartige Werkstoffe spielen bei Dampferzeugerrohren heutzutage eine immer wichtigere Rolle, da sie - zumindest im Prinzip - eine Auslegung eines Dampferzeugers für besonders hohe Dampfparameter, insbesondere für hohe Frischdampftemperaturen, und damit einhergehend besonders hohe Wirkungsgrade gestatten. Durch die materialbedingten Einschränkungen bei der Verarbeitung ist es jedoch in der Praxis nicht oder nur mit erheblichem Aufwand möglich, innenberippte Rohre mit den gewünschten, strömungstechnisch vorteilhaften Rippenprofilen im Rahmen eines Verformungsprozesses aus Glattrohren zu erzeugen. Insbesondere sind hinreichend steile Flankenwinkel und scharfkantige Übergänge in Verbindung mit großen Rippenhöhen nur schwer fertigbar. Darüber hinaus ist die Höhe der Rippen nur innerhalb eines engen Rahmens fertigbar. Zudem ergibt sich eine nur geringe Flexibilität bezüglich der Profilgestaltung entlang des Rohres.

Alternativ wurden bereits verschiedenartige drallerzeugende Einbauteile zum nachträglichen Einbau in ein Dampferzeugerrohr vorgeschlagen. Zu diesen zählen insbesondere die so genannten "Twisted Tapes": Aus einem Metallstreifen gefertigte Bänder, die in sich verdrillt oder gewunden sind. Den bislang bekannten Rohreinbauten ist allerdings der Nachteil gemeinsam, dass sie zum einen den (ursprünglich) freien Querschnitt im Zentrum des Rohres versperren und daher zu sehr hohen Druckverlusten führen, und dass sie zum anderen die gesamte Strömung ausgesprochen stark umlenken und dabei teilweise "überdrallen". Ein einfaches Twisted Tape z. B. führt bei höheren Dampfgehalten in der Zweiphasenströmung zu einem Ansammeln der Wasserphase im Zwickel zwischen der Rohrwand und dem Tape bei gleichzeitigem Austrocknen und damit unzureichender Kühlung der Innenwandbereiche leeseitig des Tapes. Dampferzeugerrohre mit Einbauten in der Art von Twisted Tapes sind daher nicht für alle bei Dampferzeugern üblicherweise auftretenden Betriebsbedingungen gleichermaßen geeignet.

Der Erfindung liegt daher die Aufgabe zugrunde, ein Dampferzeugerrohr der eingangs genannten Art anzugeben, das bei einfach und kostengünstig gehaltener Fertigung und bei einer großen Bandbreite unterschiedlicher Betriebsbedingungen ein besonders günstiges Wärmeübergangsverhalten aufweist. Des Weiteren sollen ein zur Herstellung eines derartigen Dampferzeugerrohres geeignetes Herstellungsverfahren sowie ein Durchlaufdampferzeuger angegeben werden, der bei hoher betrieblicher Sicherheit und bei einem hohen Wirkungsgrad einen besonders einfachen Aufbau besitzt.

Bezüglich des Dampferzeugerrohres wird die genannten Aufgabe erfindungsgemäß gelöst, indem zur Bildung eines drallerzeugenden Innenprofils mindestens ein Einsatz im Rohrinnenraum angeordnet ist, wobei der Einsatz mindestens einen Blechrahmen mit einer Anzahl großflächiger Ausnehmungen umfasst, wobei der Einsatz in Längsrichtung verdrillt ist, und wobei die Längskanten des jeweiligen Blechrahmens zumindest teilweise an der Rohrinnenwand anliegen.

Die Erfindung geht dabei von der Überlegung aus, dass die Mehrphasenströmung innerhalb eines Dampferzeugerrohres zur Verbesserung des Wärmeüberganges einen Drall aufweisen sollte, so dass die flüssige Phase infolge der Rotation an die Rohrinnenwand geführt wird und diese möglichst gleichmäßig benetzt. Für eine gezielte Herstellung und Aufrechterhaltung einer derartigen Drallströmung sollten daher geeignete strömungsführende Elemente im Rohrinneren angeordnet sein. Wie sich herausgestellt hat, ist die Strömungsführung dann besonders günstig, wenn einerseits weder ein "Überdrallen" noch allzu große Druckverluste entlang des Strömungsweges auftreten, andererseits die Drallwirkung dennoch intensiv genug ist, um die flüssige Phase des Strömungsmediums über den gesamten Rohrumfang an die Rohrinnenwand zu leiten.

Zur Vermeidung hoher Druckverluste, die zu einem hohen Eigenenergiebedarf für die Speisewasserpumpe führen, und zur Sicherstellung der Dampfabfuhr im Rohrinneren sollten die strömungsführenden Elemente im Wesentlichen in der Art eines Innenprofils an der Rohrinnenwand angeordnet sein und den Rohrquerschnitt im Zentrum nicht oder nur geringfügig versperren. Um überdies die mit den Rippenrohren konventioneller Bauart verbundenen Fertigungslimitierungen zu umgehen, sollte das drallerzeugende Innenprofil durch Rohreinbauten oder Einsätze verwirklicht werden, die unabhängig von dem Dampferzeugerrohr in der gewünschten Form hergestellt werden können und nachträglich in das Rohr eingezogen werden.

Zu diesem Zweck ist bei dem hier vorgestellten Konzept ein in Längsrichtung verdrillter Blechrahmen im Rohrinnenraum angeordnet, der mit seinen Längskanten zumindest teilweise, vorzugsweise jedoch vollständig, an der Rohrinnenwand anliegt. In einer alternativen Variante ist ein aus mehreren Blechrahmen gebildeter und in Längsrichtung verdrillter Einbaukörper im Rohrinneren angeordnet, wobei jeder der in sich gewundenen bzw. verdrillten Blechrahmen mit seinen beiden Längskanten an der Rohrinnenwand anliegt. Diese Ausführungsform wird nachfolgend im Rahmen der Figurenbeschreibung noch eingehender erläutert. Im Unterschied zu den bislang bekannten Twisted Tapes ist der jeweilige Blechrahmen jedoch mit einer Anzahl großflächiger Ausnehmungen, die z. B. aus dem Blechmaterial ausgestanzt oder ausgeschnitten sein können, versehen. Mit großflächig ist hier gemeint, dass die von allen Ausnehmungen insgesamt überdeckte Fläche mindestens 50 %, vorzugsweise jedoch mindestens 80 %, der Grundfläche jedes Blechrahmens ausmacht, so dass nach dem Einsetzen in den Rohrinnenraum ein wesentlicher Teil des Rohrquerschnitts im Zentrum frei bleibt. Damit kann der Dampf im Rohrinneren ungestört akkumulieren und abströmen.

Die Drallerzeugung wird anders als bei den geschlossenen Twisted Tapes von den randnahen Abschnitten, d. h., den die Ausnehmungen umrandenden oder einfassenden Randstegen bewirkt, die sich jeweils schraubenförmig an der Rohrinnenwand entlang winden und dabei eine den Rippen herkömmlicher Rippenrohre ähnliche Gestalt und ähnliche Funktion haben. Die mit dem "Überdrallen" zusammenhängenden negativen Effekte herkömmlicher Twisted Tapes werden vermieden. Stattdessen wird auch bei moderater Drallstärke und bei vergleichsweise geringem Druckverlust eine gleichmäßige Benetzung der Rohrinnenwand mit flüssigem Strömungsmittel erreicht. Die endseitigen Querstege und die Querstege, die gegebenenfalls zwischen jeweils zwei in Längsrichtung hintereinander angeordneten Ausnehmungen vorgesehen sind, haben lediglich eine Stützfunktion für den Rohreinsatz und stören die Drallströmung im Zentrum des Dampferzeugerrohres nur unwesentlich.

Besonders vorteilhaft ist bei dem neuen Konzept, dass im Gegensatz zu den Rippenrohren, die unter Einsatz erheblicher Verformungskräfte durch einen Verformungsprozess aus Glattrohren hergestellt werden, eine große Flexibilität hinsichtlich der strömungsrelevanten Parameter, wie etwa Windungszahl, Breite der Randstege (entsprechend der Rippenhöhe bei Rippenrohren), Flankenwinkel und Scharfkantigkeit besteht. Entsprechende Designvorgaben können bei der Ausführung als Einsatzbauteil besonders einfach und präzise umgesetzt werden, da hierzu in der Regel nur ein bzw. mehrere geeignet ausgestanzte oder ausgeschnittene Bleche oder Metallbänder bereitgestellt und unter Verdrillung in ein vergleichsweise einfach zu fertigendes Glattrohr eingebracht werden müssen.

Vorteilhafterweise sitzt der Rohreinsatz bei der vorgesehenen Betriebstemperatur des Dampferzeugerrohres infolge der Drillspannung des bzw. der Blechrahmen/s rutschfest im Rohrinnenraum. Das Blechmaterial und die Drillspannung sind also derart auf die geometrischen Verhältnisse abgestimmt, dass ein Kriechen oder Verrutschen des Einsatzes im Rohrinnenraum unterbunden ist.

Obwohl der Rohreinsatz bereits infolge seiner geometrischen Abmessungen und seiner Drillspannung relativ fest und sicher im Dampferzeugerrohr sitzt, ist vorzugsweise eine zusätzliche Fixierung vorgesehen, bei der jeder oder zumindest ein Blechrahmen mindestens an einer Stelle, bevorzugt in der Nähe seiner beiden Enden, mit der Rohrinnenwand fest verbunden ist. Die feste Verbindung ist dabei vorteilhafterweise eine hochwarmfeste Schweißverbindung. Eine etwas aufwendiger herzustellende Variante, die aber eine besonders sichere Fixierung gewährleistet, umfasst eine Mehrzahl von über die Längskanten des Blechrahmens verteilten Punktschweißstellen. Die Schweißfixierung lässt sich besonders gut herstellen, wenn der bzw. die Blechrahmen aus einem Werkstoff mit einer dem Rohrmaterial ähnlichen Zusammensetzung hergestellt ist/sind.

Weiterhin ist es gerade bei einem vergleichsweise langen, sich über die gesamte Höhe des Dampfkessels erstreckenden Dampferzeugerrohr wünschenswert, entlang seiner Längsausdehnung je nach Ort unterschiedliche Führungsprofile im Rohrinneren vorzusehen, die der räumlichen Entwicklung bzw. Variation sowohl des Dampfanteils als auch des Beheizungsprofils Rechnung tragen. Ein derartiges Konzept lässt sich vorteilhafterweise dadurch realisieren, dass eine Mehrzahl von Einsätzen in das Dampferzeugerrohr eingebracht ist, die in jeweils getrennten Rohrabschnitten angeordnet sind, wobei der jeweilige Einsatz mit seinen geometrischen Parametern an die im Betrieb vorgesehene lokale Beheizung und/oder an die lokalen Strömungsverhältnisse angepasst ist. Da sich ferner herausgestellt hat, dass der Drall nach einmaliger Generierung auch bei einer Zweiphasenströmung mindestens über eine Strömungsstrecke von fünf Rohrdurchmessern erhalten bleibt, ist keine vollständige, lückenlose Bestückung des Rohres notwendig. Vielmehr können die Einsätze durch Zwischenräume voneinander beabstandet in das Dampferzeugerrohr eingebaut sein.

Zweckmäßigerweise werden die hier beschriebenen Dampferzeugerrohre bei einem fossil beheizten Durchlaufdampferzeuger eingesetzt. Durch das drallerzeugende Innenprofil der Rohre und die damit verbundenen Verbesserungen im Wärmeübergangsverhalten ist auch bei Kesselkonstruktionen mit vertikaler Rohranordnung ("senkrechte Berohrung") eine ausreichende Wärmeübertragung auf das Strömungsmedium bzw. eine Kühlung der Rohrwände gewährleistet. Eine Senkrechtberohrung mit höherer Rohranzahl und mit vergleichsweise kurzen Rohrleitungslängen ermöglicht aufgrund der gegenüber schräg bzw. spiralförmig angeordneten Rohren geringeren Strömungsgeschwindigkeiten und geringeren Massenstromdichten einen Betrieb des Dampferzeugers mit reduziertem Druckverlust und mit reduziertem Mindestdurchsatz. Damit kann das den Dampferzeuger umfassende Kraftwerk für eine geringere Mindestlast ausgelegt sein. Die von geneigten Dampferzeugerrohren bekannten Separationseffekte, bei denen Wasser und Dampf bei Unterschreiten einer Mindestströmungsgeschwindigkeit bzw. einer Mindestlast nur noch geschichtet strömen, so dass Teilbereiche der Rohrwände nicht mehr benetzt werden, treten bei Senkrechtberohrung nicht auf. Außerdem entfallen aufwendige, mit umfangreichen und kostenintensiven Schweißarbeiten verbundene Tragkonstruktionen für den Dampfkessel, da eine Kesselwand mit senkrechter Berohrung in der Regel selbsttragend ausgelegt werden kann.

Weiterhin können die genannten Rohreinbauten auch bei konvektiver Beheizung, wie sie etwa im Abhitzekessel von GuD-Kraftwerken vorliegt, aufgrund des verbesserten Wärmeüberganges zu einer Reduzierung der Wärmetauscherfläche und damit zu deutlichen Kosteneinsparungen führen.

In Bezug auf das Herstellungsverfahren wird die oben genannte Aufgabe gelöst, indem ein durch Verdrillung vorgespannter Einbaukörper, der aus einem oder mehreren miteinander verbundenen Blechrahmen besteht, in den Rohrinnenraum eingebracht wird, wobei der Einbaukörper nach dem Einbringen soweit entspannt wird, bis er mit seinen Längskanten zumindest teilweise an der Rohrinnenwand anliegt. Mit anderen Worten: Der bzw. die Blechrahmen wird/werden durch Verdrillung vorgespannt und in diesem Zustand mit reduziertem Durchmesser in das Dampferzeugerrohr eingezogen. Nach seiner partiellen Entspannung presst sich der Einbaukörper selbsttätig an die Rohrinnenwand an. Die verbleibende Drillspannung ist dabei so gewählt, dass bei der vorgesehenen Betriebstemperatur des Verdampferrohres kein Verrutschen und keine über das gewünschte Maß hinausgehende Entdrillung des bzw. der Blechrahmen/s stattfinden kann. Zusätzlich wird der Einbaukörper vorteilhafterweise mindestens an einem Ende mit der Rohrinnenwand verschweißt.

Die mit der Erfindung erzielten Vorteile bestehen insbesondere darin, dass sich mit den neuen Rohreinsätzen eine flexible, für alle Rohrmaterialien einsetzbare Strömungsführung im Rohrinnenraum ergibt, die entsprechend dem Bedarf nach Wärmeübergangsverbesserung angepasst werden kann. Aufgrund der durch die weitgehend frei gestaltbaren geometrischen Parameter bewirkten Designflexibilität kann ein über die Länge des Verdampferrohres variierendes Drallprofil eingestellt werden, das exakt an die jeweilige örtliche Beheizung angepasst ist. Dabei werden die Fertigungsbegrenzungen der herkömmlichen Rippenrohre umgangen. Vor allem bei Kraftwerksneuentwicklungen mit höheren Auslegungswerten für die Dampfparameter wird die Fertigung von Rippenrohren aufgrund des höheren Chromgehaltes der für höhere Temperaturen und Drücke notwendigen neuen Materialien immer aufwendiger. Hier können die neuen drallerzeugenden Einbauten das Rippenrohr ersetzen bzw. solche Anwendungen überhaupt erst ermöglichen.

Ein Ausführungsbeispiel der Erfindung wird anhand einer Zeichnung näher erläutert. Darin zeigen:
- FIG 1: einen Durchlaufdampferzeuger in vereinfachter Darstellung mit vertikal berohrter Brennkammerwand,
- FIG 2: eine geschnittene Ansicht eines Dampferzeugerrohres mit einem ein drallerzeugendes Innenprofil ausbildenden Einsatz, der aus einem einzigen verdrillten Blechrahmen besteht,
- FIG 3: ein zur Bildung eines Rohreinsatzes vorgesehener Blechrahmen im ursprünglichen Zustand vor seiner Verdrillung,
- FIG 4: eine geschnittene Ansicht eines Dampferzeugerrohres ähnlich wie in FIG 2, wobei der Einsatz jedoch aus zwei winklig zueinander ausgerichteten Blechrahmen besteht,
- FIG 5: einen Querschnitt durch einen Einsatz, der ähnlich wie der Einsatz aus FIG 4 aufgebaut ist, in zwei aufeinander folgenden Fertigungsphasen noch vor der Verdrillung, und
- FIG 6: einen Querschnitt durch einen Rohreinsatz gemäß einer alternativen Ausführungsform, ebenfalls in zwei aufeinander folgenden Fertigungsphasen vor der Verdrillung.

Gleiche Teile sind allen Figuren mit denselben Bezugszeichen versehen.

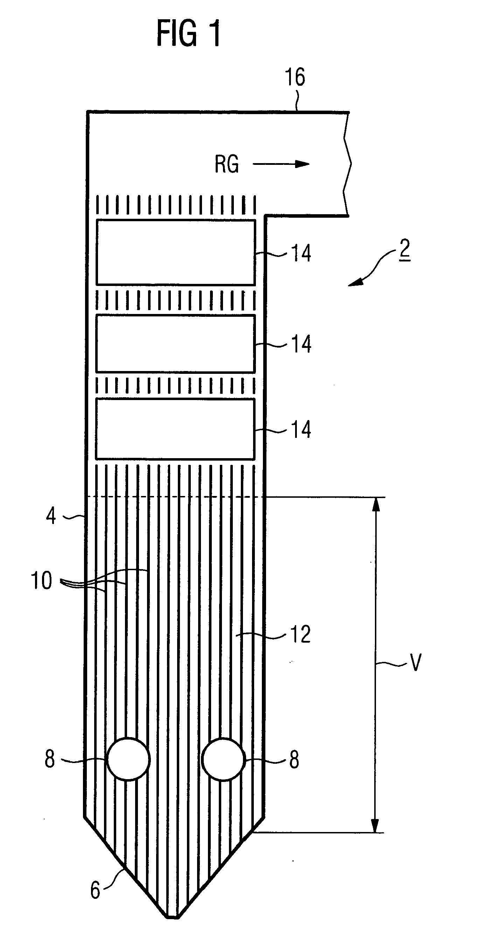

In FIG 1 ist schematisch ein Durchlaufdampferzeuger 2 mit rechteckigem Querschnitt dargestellt, dessen vertikaler Gaszug durch eine Umfassungs- oder Brennkammerwand 4 gebildet ist, die am unteren Ende in einen trichterförmigen Boden 6 übergeht.

In einem Befeuerungsbereich V des Gaszugs sind eine Anzahl von Brennern für einen Brennstoff in jeweils einer Öffnung 8, von denen nur zwei sichtbar sind, in der aus Dampferzeugerrohren 10 zusammengesetzten Brennkammerwand 4 angebracht. Die vertikal angeordneten Dampferzeugerrohre 10 sind im Befeuerungsbereich V zu einer Verdampferheizfläche 12 gasdicht miteinander verschweißt.

Oberhalb des Befeuerungsbereiches V des Gaszugs befinden sich Konvektionsheizflächen 14. Darüber befindet sich ein Rauchgasaustrittskanal 16, über den das durch Verbrennung eines fossilen Brennstoffs erzeugte Rauchgas RG den vertikalen Gaszug verlässt. Das in den Dampferzeugerrohren 10 strömende Strömungsmedium wird durch die Strahlungswärme der Brennerflammen und durch konvektive Wärmeübertragung vom Rauchgas RG beheizt und dabei verdampft. Das Rauchgas RG dient als Heizmedium für das in den Dampferzeugerrohren 10 strömende Strömungsmedium. Als Strömungsmedium ist im Ausführungsbeispiel Wasser oder ein Wasser-Dampf-Gemisch vorgesehen.

Neben dem in FIG 1 gezeigten Ein-Zug-Kessel (so genannter Turmkessel) sind selbstverständlich auch noch weitere Kesselkonfigurationen, z. B. in der Art eines Zwei-Zug-Kessels, möglich. Die nachfolgend zu beschreibenden Dampferzeugerrohre können bei allen diesen Varianten zum Einsatz kommen, und zwar sowohl im Befeuerungsbereich als auch im restlichen Rauchgaskanal. Auch ein Einsatz bei einem Abhitzedampferzeuger ist denkbar.

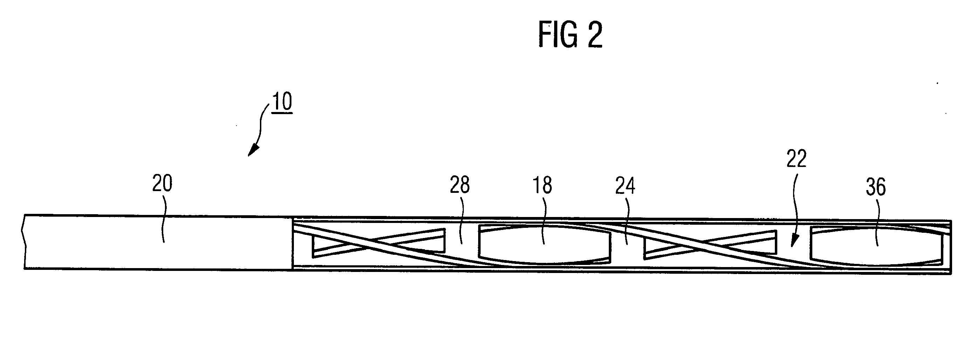

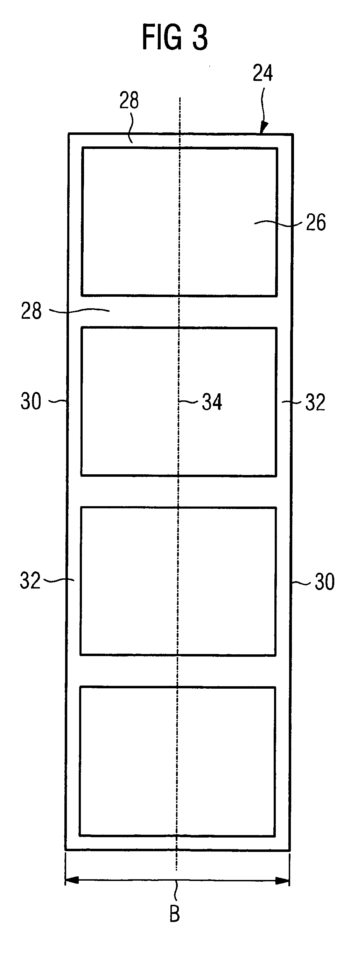

FIG 2 zeigt in einer geschnittenen Ansicht einen Ausschnitt eines für die Berohrung der Brennkammerwand 4 des Durchlaufdampferzeugers 2 eingesetzten Dampferzeugerrohres 10. In den Rohrinnenraum 18 eines Glattrohres 20 ist ein Einsatz 22 eingebracht, der zur Verbesserung des Wärmeübergangsverhaltens ein drallerzeugendes Innenprofil ausbildet. Der Einsatz 22 umfasst im Ausführungsbeispiel einen in Längsrichtung, d. h. um die Rohrachse verdrillten Blechrahmen 24, der eine Mehrzahl großflächiger Ausnehmungen 26 aufweist. Die Breite B des in FIG 3 noch vor seiner Verdrillung dargestellten Blechrahmens 24 ist dabei geringfügig größer als der Rohrdurchmesser des zu seiner Aufnahme vorgesehenen Glattrohres 20. Die rechteckförmigen Ausnehmungen 26 sind in Längsrichtung gesehen in einer Reihe hintereinander angeordnet und voneinander durch schmale Querstege 28 separiert. In Querrichtung erstrecken sich die Ausnehmungen 26 fast über die gesamte Breite B des Blechrahmens 24 und sind dabei von den beiden Längskanten 30 durch schmale Randstege 32 getrennt.

Der Blechrahmen 24 wird nun um seine Längsachse 34 verdrillt und in diesem vorgespannten Zustand in ein als Dampferzeugerrohr 10 vorgesehenes Glattrohr 20 eingebracht. Die Breite B des Blechrahmens 24 ist dabei im Verhältnis zum Rohrdurchmesser derart bemessen, dass sich der Blechrahmen 24 teilweise entspannen kann, so dass die Randstege 32 im Montageendzustand sich entlang einer vorgegebenen Schraubenlinie an der Rohrinnenwand 36 entlangwinden. Die verbleibende Restspannung fixiert den Blechrahmen 24 dabei sicher im Rohrinnenraum 18. Zusätzlich sind die Randstege 32 des Blechrahmens 24 an mehreren Stellen mit der Rohrinnenwand 36 verschweißt.

Der Blechrahmen 24 besteht wie auch die Rohrwand 38 des ihn aufnehmenden Glattrohres 20 aus einem hochwarmfesten metallischen Werkstoff mit hohem Chromanteil. Natürlich können auch andere geeignete Materialien, die dem Fachmann geläufig sind, zum Einsatz kommen. Aufgrund der vom Glattrohr 20 separaten Fertigung des Blechrahmens 24 können insbesondere die Höhe und Breite der Randstege 32 sowie der Steigungswinkel der von den Längskanten 30 gebildeten Schraubenlinien beliebig vorgegeben werden. In erster Näherung werden in der Regel die geometrischen Parameter ähnlich wie bei den Rippen konventioneller Rippenrohre gewählt. Darüber hinaus kann aber auch noch eine ortsabhängige Anpassung und Optimierung erfolgen, die auf den Verlauf des Beheizungsprofils entlang der Brennkammerwand 4 Rücksicht nimmt.

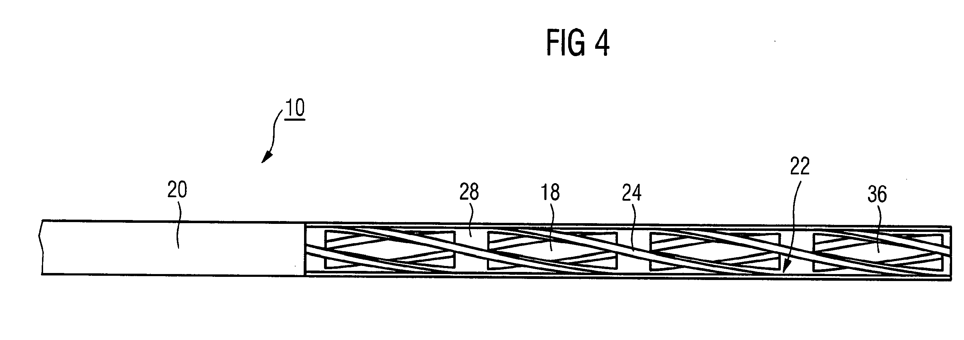

FIG 4 zeigt weiterhin eine geschnittene Ansicht eines Dampferzeugerrohres 10 mit einem Einsatz 22, der aus zwei miteinander verbundenen und winklig zueinander ausgerichteten Blechrahmen 24 besteht. Jeder der beiden Blechrahmen 24 weist ähnlich wie der in FIG 3 dargestellte Blechrahmen 24 großflächige Ausnehmungen 26 auf. Die sich jeweils schraubenförmig an der Rohrinnenwand 36 entlangwindenden Randstege 32 der beiden Blechrahmen 24 bilden dabei insgesamt ein drallerzeugendes Innenprofil in der Art eines viergängigen Schraubengewindes aus. Gegenüber dem in der Art eines zweigängigen Schraubengewindes gebildeten Innenprofil des Einsatzes 22 gemäß FIG 2 kann damit insbesondere bei vergleichsweise großen Rohrinnendurchmessern auf noch wirkungsvollere Weise eine zur gleichmäßigen Benetzung der Rohrinnenwand 36 mit einem Flüssigkeitsfilm führende Drallströmung erzeugt werden.

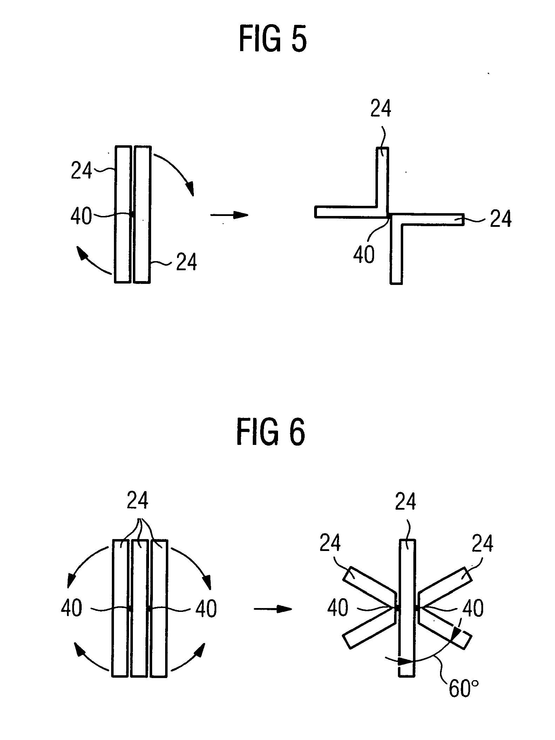

In FIG 5 ist ein besonders einfaches und zweckmäßiges Fertigungsverfahren für einen derartigen Einsatz 22 dargestellt. Dazu werden, wie im linken Teil von FIG 5 in einer Querschnittsdarstellung ersichtlich ist, zwei gleichartige Blechrahmen 24, die jeweils ähnlich wie der in FIG 3 gezeigte Blechrahmen 24 gestaltet sind, deckungsgleich aufeinander gelegt und jeweils etwa in der Mitte ihrer Querstege 28 miteinander verschweißt (Punktschweißstelle 40). Anschließend werden die beiden Blechrahmen 24 in der in FIG 5 dargestellten Weise etwa um 90° entlang ihrer Längsachse 34 umgebogen, so dass die im rechten Teil der FIG 5 gezeigte, im Querschnitt etwa kreuzförmige Struktur entsteht. Der Einsatz 22 wird schließlich in Längsrichtung verdrillt und in ein Glattrohr 20 eingezogen.

Auf ähnliche Weise kann bei Bedarf auch ein aus drei miteinander verbundenen Blechrahmen 24 bestehender Einsatz 22 hergestellt werden (FIG 6), der nach Verdrillen und Einbringen in ein Glattrohr 20 ein drallerzeugendes Innenprofil in der Art eines sechsgängigen Schraubengewindes bildet.

## Patentansprüche

1. Dampferzeugerrohr (10), bei dem zur Bildung eines drallerzeugenden Innenprofils mindestens ein Einsatz (22) im Rohrinneraum (18) angeordnet ist, wobei der Einsatz (22) einen oder mehrere Blechrahmen (24) mit einer Anzahl großflächiger Ausnehmungen (26) umfasst, und wobei der Einsatz (22) in Längsrichtung verdrillt ist und mit seinen Längskanten (30) zumindest teilweise an der Rohrinnenwand (36) anliegt.

2. Dampferzeugerrohr (10) nach Anspruch 1, bei dem die jeweilige Ausnehmung (26) von den beiden Längskanten (30) des Blechrahmens (24) jeweils durch einen schmalen Randsteg (32) beabstandet ist.

3. Dampferzeugerrohr (10) nach Anspruch 1 oder 2, bei dem mehrere in Längsrichtung hintereinander im Blechrahmen (24) angeordnete Ausnehmungen (26) durch schmale Querstege (28) voneinander beabstandet sind.

4. Dampferzeugerrohr (10) nach einem der Ansprüche 1 bis 3, bei dem der Einsatz (22) infolge seiner Drillspannung bei der vorgesehenen Betriebstemperatur rutschfest im Rohrinnenraum (18) sitzt.

5. Dampferzeugerrohr (10) nach einem der Ansprüche 1 bis 4, bei dem der Einsatz (22) an mindestens einer Stelle, bevorzugt in der Nähe seiner beiden Enden, mit der Rohrinnenwand (36) fest verbunden ist.

6. Dampferzeugerrohr (10) nach Anspruch 5, bei dem die feste Verbindung eine Schweißverbindung ist.

7. Dampferzeugerrohr (10) nach einem der Ansprüche 1 bis 6, bei dem der Einsatz(22) aus einem Werkstoff mit einer dem Rohrmaterial ähnlichen Zusammensetzung hergestellt ist.

8. Dampferzeugerrohr (10) nach einem der Ansprüche 1 bis 7, mit einer Mehrzahl von Einsätzen (22), die in jeweils getrennten Rohrabschnitten angeordnet sind, wobei der jeweilige Einsatz (22) mit seinen geometrischen Parametern an die im Betrieb vorgesehene lokale Beheizung und/oder an die lokalen Strömungsverhältnisse angepasst ist.

9. Durchlaufdampferzeuger (2), der eine Anzahl von Dampferzeugerrohren (10) umfasst, die nach einem der Ansprüche 1 bis 8 gebildet sind.

10. Verfahren zum Herstellen eines mit einem drallerzeugenden Einsatz (22) versehenen Dampferzeugerrohres (10), bei dem ein aus einem oder mehreren Blechrahmen gebildeter und durch Verdrillung vorgespannter Einsatz (22) in den Rohrinnenraum (18) eingebracht wird, wobei der Einsatz (22) nach dem Einbringen so weit entspannt wird, bis die Längskanten (30) des oder der Blechrahmen (24) zumindest teilweise an der Rohrinnenwand (36) anliegen.

11. Verfahren nach Anspruch 11, bei dem der Einsatz (22) nach seiner partiellen Entspannung an mindestens einem Ende mit der Rohrinnenwand (36) verschweißt wird.
